# EUROPEAN PATENT APPLICATION

(11) **EP 2 031 632 A2**
(43) Date of publication of application: **04.03.2009**
(21) Application number: 08153708.6
(22) Date of filing: 31.03.2008
(51) Int. Cl.: H01J 17/49, H01J 9/24, G02B 5/22

(54) **Optical film, manufacturing method of the same, and display device having the optical film**

(30) Priority: 28.08.2007 KR 20070086424
(71) Applicant: Samsung Electronics Co., Ltd., Suwon-si, Gyeonggi-do 442-742 (KR)
(72) Inventor: Lim, Sung-hwan, Gyeonggi-do (KR); Shon, Young-ki, Gyeonggi-do (KR); Park, Tae-soon, Gyeonggi-do (KR)
(74) Representative: Sherrard-Smith, Hugh

(57) **Abstract**

An optical film (10) includes: a film body having a first surface (11a) formed with a groove pattern (12) and a second surface (11b) formed with a bump pattern (13), which are formed in a single body; and a light absorption member (14) formed inside the groove pattern.

## Description

### BACKGROUND OF INVENTION

Apparatuses and methods consistent with the present invention relate to an optical film, a manufacturing method of the same, and a display device having the optical film.

As compared with a cathode ray tub (CRT) display device, a plasma display panel (PDP) display device can have a larger size and improved performance, and, thus, is recently making rapid growth.

The PDP display device includes a plasma display panel, which radiates strong electromagnetic waves that affect a human body or other electronic appliances. Therefore, the PDP display device employs a filter for decreasing the electromagnetic waves. Such filter includes various optical films to improve display quality of the PDP display device as well.

The optical films include a contrast ratio increasing film for increasing a contrast ratio, and an anti-glare film for preventing a moiré phenomenon caused by light interference.

However, those optical films are expensive, causing an increase in the production of the PDP display device as well as making the manufacturing process complicated.

### SUMMARY OF THE INVENTION

Accordingly, it is an object of the present invention to provide an optical film of which a manufacturing method is simple and a production cost is reduced.

Another object of the present invention is to provide a manufacturing method of an optical film whose manufacturing method is simple and production cost is reduced.

Still another object of the present invention is to provide a display device employing the optical film.

Additional aspects of the present invention will be set forth in part in the description which follows and, in part, will be obvious from the description, or may be learned by practice of the present invention.

The foregoing and/or other aspects of the present invention can be achieved by providing an optical film including: a film body having a first surface and a second surface which is opposite to the first surface, wherein the first surface is provided with a groove pattern thereon and the second surface has a rough surface, and wherein the groove pattern on the first surface and the rough second surface are formed in a single body; and a light absorption member formed in the groove pattern, wherein the optical film has a haze value of from 2% to 95%.

The film body may be formed of a transparent resin selected from a homopolymer or copolymer of polyvinyls including polyvinyl alcohol, polyvinylformal, and polyvinylacetal; polyesters including polycarbonate, polyethyleneterephthalate, and polybutyleneterephthalate; polyolefins including polyethylene and polypropylene; unsatureated polycarboxylates including polyacrylate, polymethacrylate, and polycrotonate; polystyrenes; polyacrylamides; modified polymer by unsaturated carboxylic monomer and acrylamide modified by an alkyl ester; and blends thereof. The transparent resin may be at least one selected from the group consisting of polyethylene, polymethylstyrene, polymethylmethacrylate, polycarbonate, polyethylene terephthalate, and polystyrene.

The groove pattern may be plural and the plurality of groove patterns may be arranged in parallel with one another at an interval.

The foregoing and/or other aspects of the present invention can be achieved by providing a method of manufacturing an optical film, the method including: providing a first roller formed with an inverse groove pattern and a second roller formed with an inverse bump pattern, which face each other; forming a film by passing a raw fluid containing a polymer material between the first roller and the second roller while rotating the first and second rollers in counter directions to each other, wherein the film has a first surface and a second surface which is opposite to the first surface, the first surface being provided with a groove pattern thereon and the second surface has a rough surface; and applying a light absorption member into the groove pattern of the first surface to provide the optical film.

The raw fluid may have a temperature higher than a glass transition temperature of the polymer material while passing between the first roller and the second roller.

The polymer material may be a transparent resin selected from the group consisting of polyethylene, polymethylstyrene, polymethylmethacrylate, polycarbonate, polyethylene terephthalate, and polystyrene.

The groove pattern may be plural and the plurality of groove patterns may be arranged in parallel with one another.

The foregoing and/or other aspects of the present invention can be achieved by providing a display device including a display panel having a first surface and a second surface; and a filter placed in front of one of the first or the second surface of the display panel and having an optical film, the optical film including: a film body having a first surface and a second surface which is opposite to the first surface, wherein the first surface is provided with a groove pattern thereon and the second surface has a rough surface, and wherein the groove pattern on the first surface and the rough second surface are formed in a single body; and a light absorption member formed in the groove pattern, wherein the optical film has a haze value of from 2% to 95%.

The film body may be formed of a transparent resin selected from the group consisting of polyethylene, polymethylstyrene, polymethylmethacrylate, polycarbonate, polyethylene terephthalate, and polystyrene.

The groove pattern may be plural and the plurality of groove patterns may be arranged in parallel with one another.

The filter may further comprise a transparent plate having a first surface facing the display panel and a second surface opposite to the first surface, and the optical film is placed on the first surface of the transparent plate.

The filter may further comprise a conductive layer between the transparent plate and the optical film.

The transparent plate may comprise a heat strengthened glass.

The filter may comprise an anti-reflection film placed on the second surface of the transparent plate.

The display panel may comprise a plasma display panel.

### BRIEF DESCRIPTION OF THE DRAWINGS

The above and/or other aspects of the present invention will become apparent and more readily appreciated from the following description of the exemplary embodiments, taken in conjunction with the accompanying drawings, in which:
FIG. 1 is a perspective view of an optical film according to a first exemplary embodiment of the present invention;
FIG. 2 is a sectional view of the optical film, taken along line II-II in FIG. 1;
FIG. 3 is a perspective view of an optical film according to a second exemplary embodiment of the present invention;
FIG. 4 is an enlarged rear view of the optical film according to the second exemplary embodiment of the present invention;
FIGS. 5 and 6 are views for explaining a manufacturing method of an optical film according to a third exemplary embodiment of the present invention;
FIG. 7 is a view for explaining a manufacturing method of an optical film according to a fourth exemplary embodiment of the present invention;
FIG. 8 is an exploded perspective view of a display device according to a fifth exemplary embodiment of the present invention; and
FIG. 9 is a sectional view of the filter included in the display device shown in FIG. 8, taken along line IX-IX in FIG. 8.

### DETAILED DESCRIPTION OF EXEMPLARY EMBODIMENTS OF THE INVENTION

Reference will now be made in detail to the embodiments of the present invention, examples of which are illustrated in the accompanying drawings, wherein like reference numerals refer to like elements throughout. The embodiments are described below so as to explain the present invention by referring to the figures.

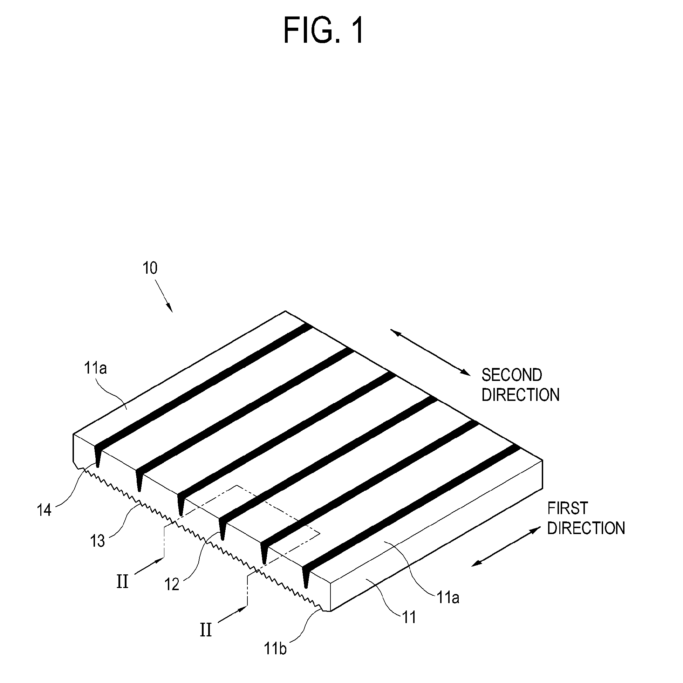

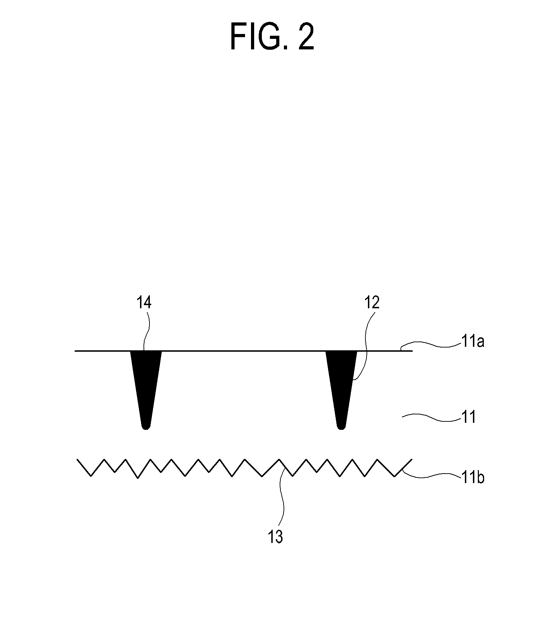

An optical film according to a first exemplary embodiment of the present invention will be described below with reference to FIGS. 1 and 2.

An optical film 10 includes a film body 11 and a light absorption member 14. The film body 11 is made of a transparent resin. The transparent resin may have a glass transition temperature of from 90 to 180 °C. In an embodiment, the transparent resin has a glass transition temperature of from 120 to 180 °C. The transparent resin may include, a homopolymer or copolymer of polyvinyls including polyvinyl alcohol, polyvinylformal, and polyvinylacetal; polyesters including polycarbonate, polyethyleneterephthalate, and polybutyleneterephthalate; polyolefins including polyethylene and polypropylene; unsatureated polycarboxylates including polyacrylate, polymethacrylate, and polycrotonate; polystyrenes; polyacrylamides; modified polymer by unsaturated carboxylic monomer and acrylamide modified by an alkyl ester; and blends thereof. In an embodiment, polyethylene, polymethylstyrene, polymethylmethacrylate, polycarbonate, polyethylene terephthalate, and polystyrene may be advantageously used.

In FIGS. 1 and 2, the thickness of the optical film 10 was exaggerated for illustrative convenience. Generally, the thickness of the film body 11 is from 0.3 to 50 µm. In one embodiment, the thickness is from 0.5 to 20 µm. The film body may have other components, as long as they do not adversely affect the property of the film body, which include, but are not limited to, an antistatic agent, a heat stabilizer, an antioxidant, a dispersant, a flame retardant, a lubricant, a plasticizer or an ultraviolet ray absorbent.

The film body 11 has a first surface 11a and a second surface 11b, which is opposite to the first surface 11a. The first surface 11a is formed with a plurality of groove patterns 12. Each groove pattern 12 extends in a first direction. Further, the groove patterns 12 may be arranged at a regular interval along a second direction which is perpendicular to the first direction. Also, in Fig. 1, each groove pattern 12 has a tapered end or tip toward the internal of the film body 11. However, it should be noted that the groove pattern 12 may have a constant width along its depth in a thickness direction of the film body 11 or have a gradually wider end toward the internal of the film body 11.

The film body 11 has a second surface 11b which is rough. The term "rough" as employed herein means that the surface is not even or smooth. Thus the second surface 11b may have discrete bumps or continuous bumps. In the embodiment shown in Figs. 1 and 2, the second surface 11b is of a wave surface, in particular, triangular wave surface. The wave pattern 13 elongates in the first direction. Here, wave patterns 13 have a triangular shape and are formed irregularly. However, it should be noted that the wave pattern may be of round wave, and may be formed regularly.

The light absorption member 14 is provided in and fills the groove pattern 12 and does not protrude over the first surface 11a of the film body 11. Therefore, the first surface 11a is smooth or even. For example, a black pigment ink may be used as the light absorption member 14. Here, there is no limit to the material and the type of the light absorption member 14 as long as it can absorb incident light. Examples of the color absorption member include, but are not limited to, dyes such as a benzadine direct dye; an azo direct dye including a diaryl amine derivatives type azo dye, cyanur ring type azo dye, stilbene type azo dye and thiazole type azo dye; dioxazine direct dye and phthalocyanine direct dye, which are known in the art.

In the foregoing optical film 10, the light absorption member 14 reduces reflection of the incident light so as to increase the contrast ratio, and the wave pattern 13 scatters the incident light in order to prevent a moiré phenomenon. The wave pattern 13 may be provided to make the optical film 10 have a haze value of 2% through 95%, more specifically, 5% through 20%.

Meanwhile, the groove pattern 12 and the wave pattern 13 are integrated into the film body 11. In other words, the groove pattern 12 and the wave pattern 13 are formed in a single body. Here, the "single body" does not mean the structure in which the plurality films are coupled by an adhesive, which will be described later in more detail while describing a manufacturing process of the optical film 10. The optical film, thus, has a smooth first surface 11a and a rough second surface 11b.

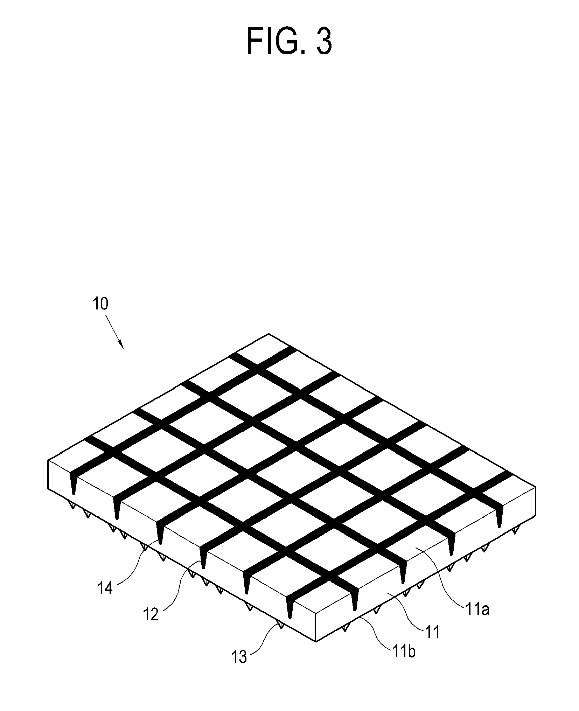

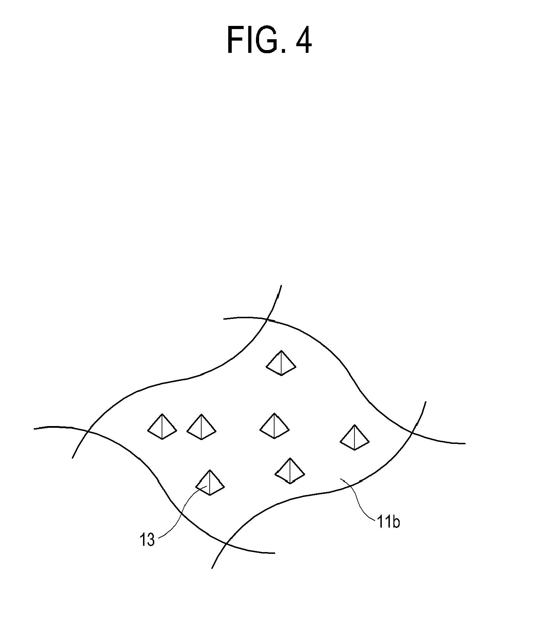

Below, an optical film 10 according to a second exemplary embodiment of the present invention will be described with reference to FIGS. 3 and 4, keeping the accent on difference from that of the first exemplary embodiment.

In this embodiment, the groove pattern 12 extends in the second direction as well as the first direction, forming a lattice. Thus, the light absorption member 14 forms a lattice pattern. According to the present invention, the light absorption member 14 is not limited to the patterns of the first and second exemplary embodiments as shown in Figs 1-3, and may have various patterns. The intervals of the neighboring grooves may be regular or irregular, and maybe the identical to or different from each other in the first and the second directions.

In the second embodiment shown in Figs. 3 and 4, the second surface 11b has randomly scattered pyramidal spikes 13. According to the present invention, the surface shape of the uneven, rough second surface 11b is not limited to the first and second embodiments shown in Figs. 1-4, and may vary as long as it can scatter the incident light. However, it is preferable but not necessary that each of the wave or pyramidal spike patterns 13 which form an uneven, rough second surface 11b, is smaller than a pixel forming an image.

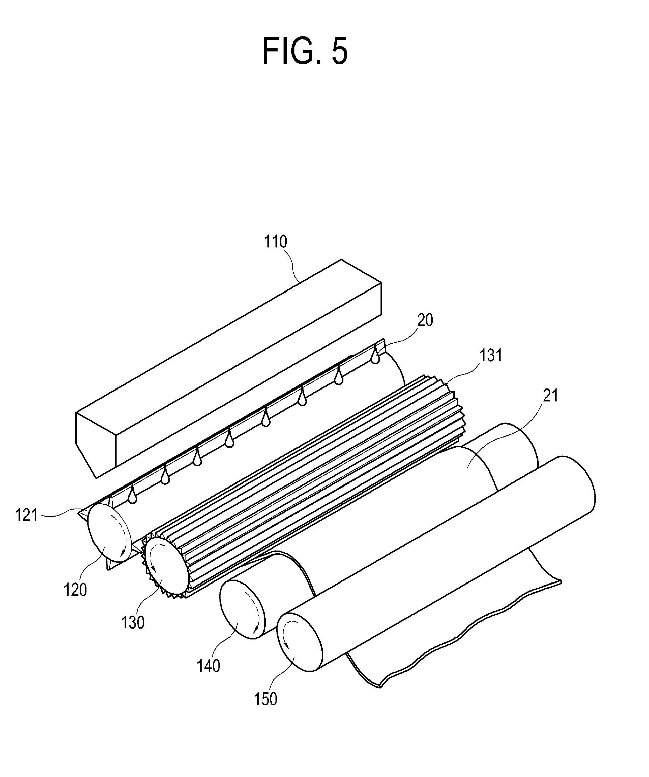

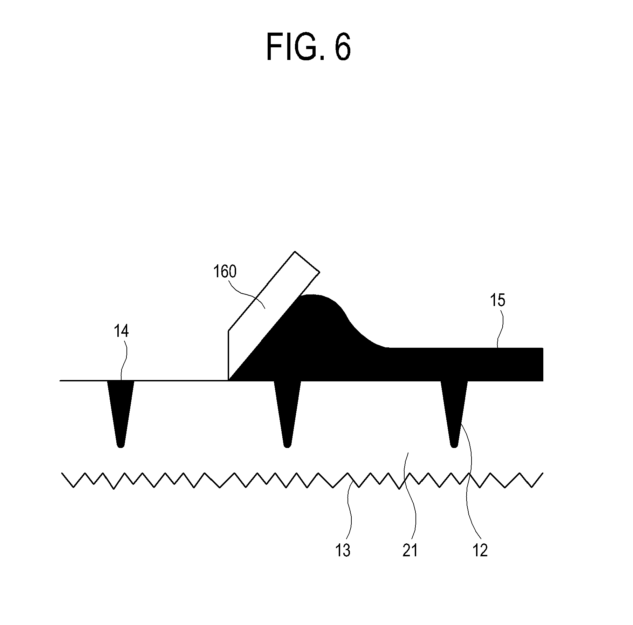

Below, a manufacturing method of an optical film according to a third exemplary embodiment of the present invention will be described with reference to FIGS. 5 and 6.

Referring to FIG. 5, a polymer material for the film body 11 of the optical film 10 is melted and prepared as a raw fluid 20.

The raw fluid 20 passes through a slit coater 110 and is then supplied between a first roller 120 and a second roller 130. The first roller 120 and the second roller 130 face and rotate in counter directions to each other.

On the surface of the first roller 120, an inverse groove pattern 121 is formed corresponding to the groove pattern 12 of the optical film 10. Further, the inverse groove pattern 121 is formed along a lengthwise direction of the first roller 120, which will result in the formation of the groove pattern 12 extending in the width direction of the film (the first direction in Fig. 1).

On the surface of the second roller 130, an inverse bump structure, for example, an inverse wave pattern 131 is formed corresponding to the triangular wave pattern 13 of the optical film 10 (as shown in Figs. 1 and 2). The inverse wave pattern 131 is formed along a circumferential direction of the second roller 130 and arranged in parallel with a lengthwise direction of the second roller 130. Therefore, the pattern of the grooves 12 on the first surface of the film and the wave 13 on the second surface of the film are parallel.

The raw fluid 20 becomes a parent optical film 21 while passing between the first roller 120 and the second roller 130. In this process, the groove pattern 12 is formed on one surface of the parent optical film 21 by the inverse groove pattern 121, and the wave pattern 13 is formed on the other surface of the parent optical film 21 by the inverse wave pattern 131.

While passing between the first roller 120 and the second roller 130, a temperature of the raw fluid 20 has to be higher than a glass transition temperature of the polymer material. If the temperature of the raw fluid 20 is lower than the transition temperature of the polymer material, it is difficult to form the groove pattern 12 and the wave pattern 13 because of high stiffness.

Then, the parent optical film 21 is cooled and polished while passing between a third roller 140 and a fourth roller 150. The third roller 140 and the fourth roller 150 may have glass surfaces.

The temperature of the parent optical film 21 passing between the third and fourth rollers 140 and 150 has to be below the glass transition temperature of the polymer material. If the temperature of the parent optical film 21 is above the transition temperature of the polymer material, the groove pattern 12 and the wave pattern 13 may be deformed or damaged.

In FIG. 5, the sizes of the inverse groove pattern 121 and the inverse wave pattern 131 were exaggerated

Then, as shown in FIG. 6, a light absorption material layer such as a black ink layer 15 is applied to the parent optical film 21 and then scraped away by an appropriate tool, such as a squeegee 160 except the black ink remaining in the groove pattern 12, thereby forming the light absorption member 14 in the groove pattern 12.

Subsequently, the parent optical film 21 is cut to a desired size, thereby completing the optical film 10. Alternatively, the light absorption member 14 may be formed after cutting the parent optical film 21.

According to the foregoing manufacturing method, the parent optical film 21 into which the groove pattern 12 and the wave pattern 13 are provided is manufactured by a single process. Further, the parent optical film 21 is manufactured by not only the single process but also continuous extrusion, so that productivity increases, thereby reducing a production cost of the optical film 10.

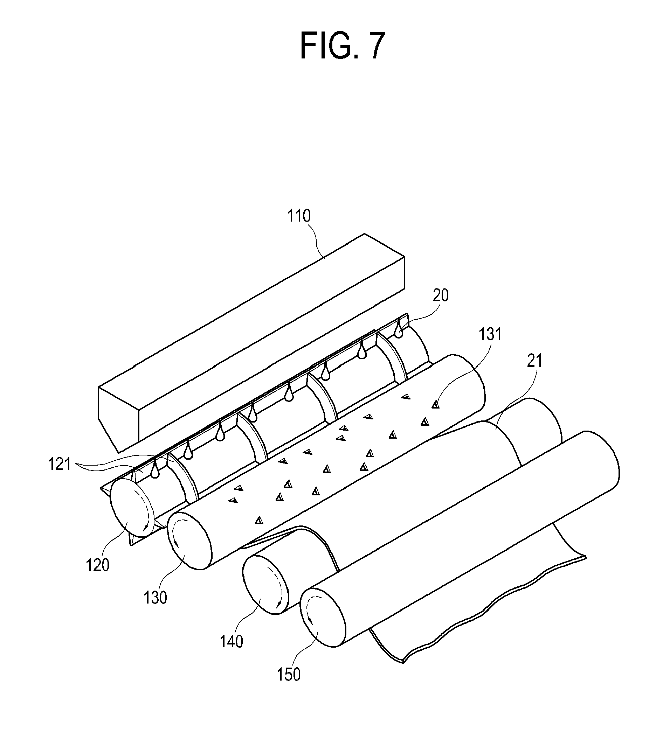

Below, a manufacturing method of an optical film according to a fourth exemplary embodiment of the present invention will be described with reference to FIG. 7. In this embodiment, the optical film 10 according to the second exemplary embodiment is manufactured.

Referring to FIG. 7, the inverse groove pattern 121 is formed on the surface of the first roller 120 in correspondence with the groove pattern 12 of the optical film 10. The inverse groove pattern 121 is formed along the lengthwise direction and a circumferential direction of the first roller 120.

The inverse pyramidal spike pattern 131 is formed on the surface of the second roller 130 in correspondence with the pyramidal spike pattern 13 of the optical film 10. The inverse pyramidal spike pattern 131 is randomly formed on the second roller 130.

The next steps for forming the light absorption member 13 are performed like that of the third exemplary embodiment of the present invention.

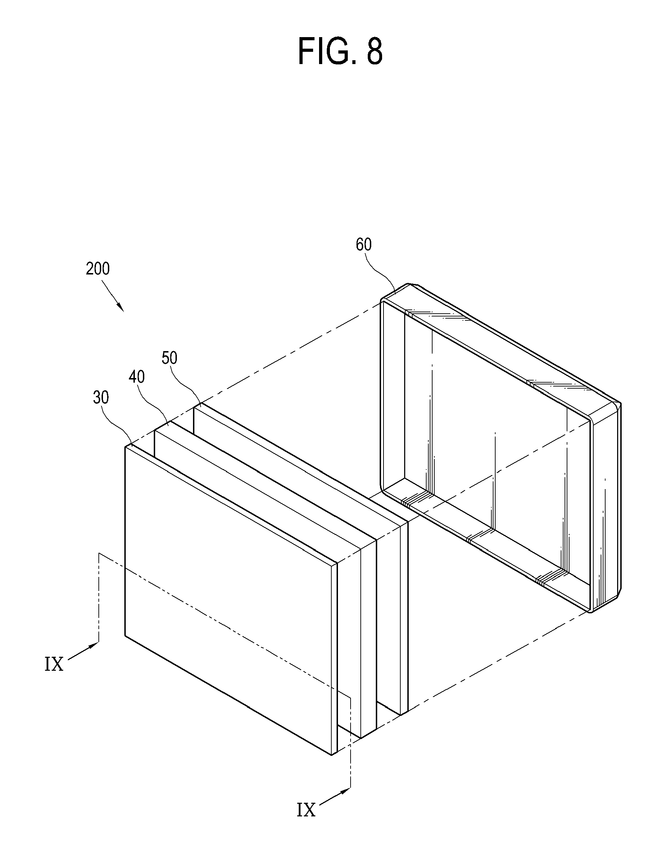

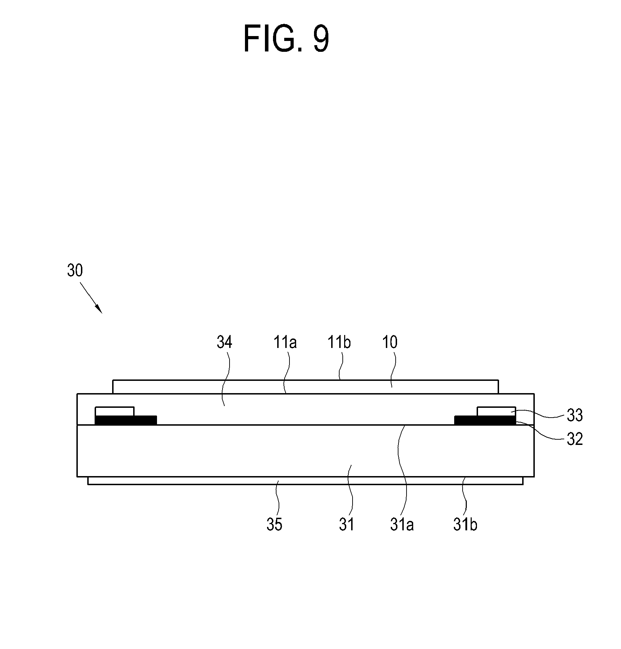

Below, a display device according to a fifth exemplary embodiment of the present invention will be described with reference to FIGS. 8 and 9.

Referring to FIG. 8, a display device 200 includes a filter 30, a display panel 40, a driving circuit board 50, and a case 60. The detailed structure and configuration of the display device 200 may vary depending on the type of the display panel 40 and the use of the display device 200.

The display panel 40 may be a plasma display panel (PDP), a field emission display (FED) panel, an organic electroluminescent display (OLED) panel or a liquid crystal display (LCD) panel, but not limited thereto. For example, the plasma display panel uses a phenomenon that gas discharge is generated between two electrodes when strong voltage is applied between the electrodes, and light is emitted as ultraviolet rays generated by the gas discharge collide with a fluorescent material.

If the plasma display panel is employed as the display panel 40, the display panel 40 includes a front substrate, a rear substrate, and an electrode layer formed between the front and rear substrates, which are not shown.

The electrode layer of the display panel 40 is driven by the driving circuit board 50. The case 60 accommodates the filter 30, the display panel 40 and the driving circuit board 50.

The filter 30 shields electromagnetic waves generated in the display panel 40 and enhances display quality. The rough second surface of the optical film (10 - not shown) of the filter 30 faces the display panel 40. Referring to FIG. 9, the filter 30 includes a transparent plate 31, a profile unit 32, a ground unit 33, a conductive layer 34, an anti-reflection film 35 and an optical film 10. Further, there is an air gap of 3mm to 5mm between the filter 30 and the display panel 40.

The transparent plate 31 may be made of a heat strengthened glass, but not limited thereto. The transparent plate 31 has a first surface 31a facing the display panel 40 and a second surface 31b facing a user.

The profile unit 32 is formed on the first surface 31a of the transparent plate 31 along an edge of the transparent plate 31. The profile unit 32 conceals a non-display region of the display panel 40 from a user. Here, the profile unit 32 may be made of black ceramic.

Also, the ground unit 33 is formed along the edge of the transparent plate 31 and grounds the conductive layer 34. The ground unit 33 may be made of metal. Here, a part of the ground unit 33 is electrically connected to a metal part of the case 60.

The conductive layer 34 is formed throughout the first surface 31a of the transparent plate 31. The conductive layer 34 prevents the electromagnetic waves generated in the display panel 40 from leaking to the outside of a display device 1. The conductive layer 34 may include indium tin oxide (ITO), Ag, Au, Cu, Al, conductive polymer, etc., and may be formed by sputtering, vacuum deposition, ion plating, chemical vapor deposition, physical vapor deposition, etc. The conductive layer 34 may have a multi-layered structure.

The optical film 10 is placed on the conductive layer 34. According to an exemplary embodiment of the present invention, the concave-and-convex pattern 13 of the optical film 10 faces the display panel 40, but not limited thereto. Alternatively, the groove pattern 12 of the optical film 10 may face the display panel 40.

The optical film 10 according to an exemplary embodiment of the present invention enhances the contrast ratio and prevents the moiré phenomenon at once. Accordingly, there is no need of joining a contrast ratio increasing film and an anti-glare film together, thereby simplifying a manufacturing method of the filter 30.

The anti-reflection film 35 is formed on the second surface 31b of the transparent plate 31.

In the meantime, the filter 30 additionally includes an adhesive layers for joining respective elements. Here, a pressure sensitive adhesive (PSA) may be used as the adhesive layer.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical film (10) comprising:
a film body having a first surface (11a) and a second surface (11b) which is opposite to the first surface, wherein the first surface (11a) is provided with a groove pattern (12) thereon and the second surface has a rough surface (13), and wherein the groove pattern on the first surface and the rough second surface are formed in a single body; and
a light absorption member (14) formed in the groove pattern,
wherein the optical film has a haze value of from 2% to 95%.

2. The optical film according to claim 1, wherein the film body is formed of a transparent resin selected from the group consisting of polyolefins, polyesters, polyvinyls, polystyrenes, polyacrylamides, unsaturated polycarboxylates, and mixtures thereof.

3. The optical film according to claim 2, wherein the transparent resin is selected from the group consisting of polyethylene, polymethylstyrene, polymethylmethacrylate, polycarbonate, polyethylene terephthalate, and polystyrene.

4. The optical film according to any preceding claim, which has the haze value of from 5% to 20%.

5. The optical film according to any preceding claim, wherein a plurality of the groove patterns (12) are arranged in parallel with one another at an interval.

6. The optical film according to any preceding claim, wherein the second surface is provided with a regular or irregular wave pattern or spikes to form the rough surface.

7. The optical film according to any preceding claim, wherein the light absorption member is a dye.

8. A method of manufacturing an optical film, the method comprising:
providing a first roller (120) formed with an inverse groove pattern (121) and a second roller (130) formed with an inverse bump structure pattern (131), which face each other;
forming a film by passing a raw fluid (20) containing a polymer material between the first roller and the second roller while rotating the first and second rollers in counter directions to each other, wherein the film has a first surface (11a) and a second surface (11b) which is opposite to the first surface, the first surface being provided with a groove pattern (12) thereon and the second surface has a rough surface (13); and
applying a light absorption member (14) into the groove pattern of the first surface to provide the optical film.

9. The method according to claim 8, wherein the raw fluid has a temperature higher than a glass transition temperature of the polymer material while passing between the first roller and the second roller.

10. The method according to claim 8 or 9, wherein the polymer material is a transparent resin selected from the group consisting of polyolefins, polyesters, polyvinyls, polystyrenes, polyacrylamides, unsaturated polycarboxylates, and mixtures thereof.

11. The method according to claim 10, wherein the transparent resin is selected from the group consisting of polyethylene, polymethylstyrene, polymethylmethacrylate, polycarbonate, polyethylene terephthalate, and polystyrene.

12. The method according to any of claims 8 to 11, wherein the optical film has a plurality of the groove patterns which are arranged in parallel with one another.

13. A display device (200) comprising:
a display panel (40) having a first surface and a second surface; and
a filter (3) placed in front of one of the first or the second surface of the display panel, the filter having an optical film, which comprises:
a film body (10) having a first surface (11a) and a second surface (11b) which is opposite to the first surface, wherein the first surface is provided with a groove pattern (12) thereon and the second surface has a rough surface (13), and wherein the groove pattern on the first surface and the rough second surface are formed in a single body; and
a light absorption member (14) formed in the groove pattern,
wherein the optical film has a haze value of from 2% to 95%.

14. The display device according to claim 13, wherein the film body is formed of a transparent resin selected from the group consisting of polyolefins, polyesters, polyvinyls, polystyrenes, polyacrylamides, unsaturated polycarboxylates, and mixtures thereof.

15. The display device according to claim 14, wherein the transparent resin is selected from the group consisting of polyethylene, polymethylstyrene, polymethylmethacrylate, polycarbonate, polyethylene terephthalate, and polystyrene.

16. The display device according to any of claims 13 to 15, wherein the film has a plurality of groove patterns (12) which are arranged in parallel with one another.

17. The display device according to any of claims 13 to 16, wherein the filter further comprises a transparent plate (31) having a first surface (31a) facing the display panel and a second surface (31b) opposite to the first surface, and
the optical film is placed on the first surface of the transparent plate.

18. The display device according to claim 17, wherein the filter (30) further comprises a conductive layer (34) disposed between the transparent plate and the optical film.

19. The display device according to claim 17 or 18, wherein the transparent plate comprises a heat strengthened glass.

20. The display device according to any of claims 17 to 19, wherein the filter comprises an anti-reflection film placed on the second surface (31b) of the transparent plate.

21. The display device according to any of claims 13 to 20, wherein the display panel comprises a plasma display panel.

22. The display device according to any of claims 13 to 21, wherein the second surface of the optical film is provided with a regular or irregular wave pattern or spikes (13) to form the rough surface.

23. The display device according any of to claims 8 to 22, wherein the light absorption member is a dye.
